# EUROPÄISCHE PATENTSCHRIFT

(11) **EP 2 570 349 B1**
(45) Veröffentlichungstag und Bekanntmachung des Hinweises auf die Patenterteilung: **10.04.2019**
(21) Anmeldenummer: 12006275.7
(22) Anmeldetag: 06.09.2012
(51) Int. Cl.: B64G 1/64

(54) **Vorrichtung zum Aktuieren einer Komponente, insbesondere einer Raumfahrtkomponente**
Device for actuating a component, in particular a component used in space
Dispositif d'actionnement d'un composant, en particulier d'un composant utilisé dans l'espace

(30) Priorität: 16.09.2011 DE 102011113392
(43) Veröffentlichungstag der Anmeldung: 20.03.2013
(73) Patentinhaber: ArianeGroup GmbH, 82024 Taufkirchen (DE)
(72) Erfinder: Wagner, Adalbert, 83737 Irschenberg (DE); Nussbaumer, Tobias, 83730 Fischbachau (DE)
(74) Vertreter: Schicker, Silvia

(56) Entgegenhaltungen:
- DE-A1-102005 038 654
- US-A- 4 067 308
- US-A- 4 290 344
- US-A- 5 002 418
- US-A- 5 771 742
- US-A1- 2010 050 712

## Beschreibung

Die Erfindung betrifft eine Vorrichtung zum nicht-explosiven Aktuieren einer Komponente, insbesondere einer Raumfahrtkomponente.

Derartige Vorrichtungen werden bspw. in Raumfahrtanwendungen als Auslösemechanismus für Niederhalt-, Trenn- oder Entfaltsysteme eingesetzt. Man unterscheidet bei derartigen Vorrichtungen pyrotechnische und nicht-explosive Aktuatoren. Pyrotechnische Aktuatoren weisen den Nachteil auf, dass diese lediglich eine einmalige Aktuierung vornehmen können. Darüber hinaus produzieren diese während bzw. bei ihrer Aktuierung Kontaminierungsstoffe und haben ein hohes Maß an funktionalen Schocks. Dem gegenüber können nicht-explosive Aktuatoren häufig mehrfach verwendet werden, wobei gleichzeitig niedrigere funktionale Schocks bei deren Aktuierung auftreten.

Das Dokument US 5,771,742 offenbart eine Vorrichtung gemäß dem Oberbegriff des Anspruchs 1.

Es ist Aufgabe der vorliegenden Erfindung, eine verbesserte Vorrichtung zum Aktuieren einer Komponente, insbesondere einer Raumfahrtkomponente, anzugeben, welche mehrfach verwendet werden kann und geringstmögliche funktionale Schocks bei ihrer Aktuierung nach sich zieht.

Diese Aufgabe wird gelöst durch eine Vorrichtung gemäß den Merkmalen des Patentanspruches 1. Vorteilhafte Ausgestaltungen ergeben sich aus den abhängigen Patentansprüchen.

Die Erfindung schlägt eine Vorrichtung zum nicht-explosiven Aktuieren einer Komponente, insbesondere einer Raumfahrtkomponente, vor. Die Vorrichtung umfasst ein Gehäuse. In dem Gehäuse ist ein Bolzen zentral angeordnet, der zwischen einer ersten Position, in der ein äußerer Abschnitt des Bolzens in Bezug auf das Gehäuse außerhalb des Gehäuses angeordnet ist, und einer zweiten Position, in der der äußere Abschnitt des Bolzens innerhalb des Gehäuses angeordnet ist, bewegbar. Eine Feder ist zwischen dem Gehäuse und dem Bolzen angeordnet. Die Vorrichtung umfasst weiter eine, zwischen einer ersten und einer zweiten Stellung, drehbar in dem Gehäuse angeordnete Aktuatorhülse, die einen als Bahnkurve (Trajektorie) ausgebildeten Führungsabschnitt umfasst, entlang dem der Bolzen während einer Drehung der Aktuatorhülse geführt wird.

Mit der erfindungsgemäßen Vorrichtung kann eine Komponente, insbesondere eine Raumfahrtkomponente, nicht-explosiv aktuiert werden. Hierdurch kann die Vorrichtung zum Aktuieren der Komponente auch mehrfach genutzt werden. Die Vorrichtung weist einen einfachen konstruktiven Aufbau auf, bei dem eine Bewegung des Bolzens mit geringen Schockbelastungen für die gekoppelten Komponenten verbunden ist. Durch die nicht-explosive Aktuierung der Komponente entstehen keine Bauteilverschmutzungen. Der einfache konstruktive Aufbau ermöglicht die Bereitstellung der Vorrichtung mit geringem Gewicht, was insbesondere bei Raumfahrtanwendungen von Bedeutung ist. Durch entsprechende Anpassung der Feder kann die Vorrichtung für unterschiedliche Lasten bzw. Belastungen ausgelegt bzw. an diese angepasst werden.

Gemäß einer zweckmäßigen Ausgestaltung ist die Aktuatorhülse um eine Bewegungsachse des Bolzens drehbar in dem Gehäuse gelagert. Dadurch, dass der Bolzen und die Aktuatorhülse längs der gleichen Bewegungsachse angeordnet sind, lässt sich die Vorrichtung mit kompakten Abmaßen aufbauen. Darüber hinaus sorgt dieses Konstruktionsprinzip für einen einfachen und zuverlässigen Aufbau zur Bewegung des Bolzens zwischen seiner ersten und seiner zweiten Position.

Es ist weiter vorgesehen, dass eine von der Feder erzeugte Federkraft den Bolzen gegen den Führungsabschnitt der Aktuatorhülse presst. Hierdurch wird, sofern eine entsprechende Bewegung durch die Aktuatorhülse zugelassen wird, eine Bewegung des Bolzens von seiner ersten Position, in der der äußere Abschnitt des Bolzens in Bezug auf das Gehäuse außerhalb des Gehäuses angeordnet ist, in die zweite Position, in der der äußere Abschnitt des Bolzens innerhalb des Gehäuses angeordnet ist, zugelassen.

In einer weiteren Ausgestaltung weist die Bahnkurve des Führungsabschnitts der Aktuatorhülse zwischen der ersten und der zweiten Stellung einen Hub auf, welcher eine Bewegung des Bolzens von der ersten und der zweiten Position, oder umgekehrt, erzwingt. Durch die Bahnkurve des Führungsabschnitts der Aktuatorhülse wird somit die Position des Bolzens relativ zum Gehäuse sowie die Geschwindigkeit bzw. der Geschwindigkeitsverlauf, mit der bzw. dem sich der Bolzen zwischen der ersten und der zweiten Position bewegt, vorgegeben.

In einer weiteren zweckmäßigen Ausgestaltung ist der Führungsabschnitt der Aktuatorhülse an einer Innenseite der Aktuatorhülse ausgebildet, wobei ein innerer Abschnitt des Bolzens, dessen Außendurchmesser gleich oder kleiner als der Innendurchmesser der Aktuatorhülse ist, in der ersten Position geringfügig in die Aktuatorhülse ragt und in der zweiten Position zusätzlich um den Hub der Bahnkurve des Führungsabschnitts in die Aktuatorhülse eintaucht. Alternativ könnte der Führungsabschnitt auch auf der Außenseite der Aktuatorhülse angebracht sein, sodass die Aktuatorhülse in einen Hohlabschnitt des Bolzens eintaucht, wenn sich der Bolzen in seiner zweiten Position befindet. Beide Varianten ermöglichen durch Drehung der Aktuatorhülse eine Bewegung des Bolzens.

In einer weiteren zweckmäßigen Ausgestaltung ist die Bahnkurve des Führungsabschnitts der Aktuatorhülse, bezogen auf die Flächennormale der Bewegungsrichtung des Bolzens, um einen vorgegebenen, spitzen Winkel geneigt. Diese "schiefe Ebene" dient dazu, eine während der Betätigung der Vorrichtung, anfallende Reibung zu kompensieren.

Dem gleichen Zweck dient die weitere Ausgestaltung, gemäß der die Aktuatorhülse in einem Radiallager gelagert ist, welche sich an dem Gehäuse abstützt.

Die Aktuatorhülse ist an ihrem von dem Bolzen abgewandten Ende kugelgelagert. Prinzipiell ist es ausreichend, wenn lediglich eine der beiden Lagerungen vorgesehen ist. Die Integration beider Lager in die Vorrichtung sorgt für eine redundante Lagerung, welche zuverlässig eine minimale Reibung während der Betätigung der Vorrichtung sicher stellt.

Um die Drehung der Aktuatorhülse um die Bewegungsachse, welche mit einer Rotationsachse der Aktuatorhülse übereinstimmt, bewerkstelligen zu können, ist vorgesehen, dass zwischen dem von dem Bolzen abgewandten Ende der Aktuatorhülse und dem Gehäuse eine Torsionsfeder angeordnet ist. Die Torsionsfeder kann bspw. auf eine Bodenplatte der Aktuatorhülse wirken. Die Torsionsfeder ist z.B. vorgespannt, wenn sich der Bolzen in seiner ersten Position befindet. Die Vorrichtung kann auch derart ausgestaltet sein, dass eine Vorspannung der Torsionsfeder gegeben ist, wenn der Bolzen sich in seiner zweiten Position befindet.

Es ist weiterhin zweckmäßig, wenn die Torsionshülse durch einen von außen durch eine Öffnung des Gehäuses ragenden Hebel verdrehbar ist. Auf diese Weise ist - unter Überwindung der Federkraft der Torsionsfeder - eine einfache Rückstellung der Vorrichtung in ihre Ausgangsposition möglich.

In einer weiteren zweckmäßigen Ausgestaltung ist die (zwischen dem Gehäuse und dem Bolzen angeordnete) Feder eine Druckfeder, die sich an einer Schulter des Bolzens abstützt, welche sich in etwa in radialer Richtung, bezogen auf die Bewegungsrichtung des Bolzens, erstreckt. Eine besonders einfache und Bauraum-optimierte Konstruktion ergibt sich dann, wenn die Feder eine Spiralfeder umfasst, die um den Bolzen herumgeführt ist.

Um eine Beeinflussung der Bewegung des Bolzens durch Reibung aufgrund eines Kontakts mit der Feder auszuschließen, ist weiter vorgesehen, die Feder zumindest abschnittsweise um einen Führungsabschnitt des Gehäuses zu führen, welcher sich um die Öffnung für den Bolzen herum in das Innere des Gehäuses erstreckt. Durch den Führungsabschnitt kann entsprechend dessen Länge ein Kontakt der Feder mit dem Bolzen vermieden werden. Ist der Führungsabschnitt im Vergleich zum Bolzen ausreichend lang, so findet aufgrund der Eigenstabilität der Feder auch in dem Bereich keine Berührung statt, in dem der Bolzen und die Feder ohne dazwischen liegende Komponente nebeneinander angeordnet sind.

Weitere Vorteile und Merkmale der Erfindung werden nachfolgend anhand der Beschreibung der Figuren erläutert. Es zeigen:
- Fig. 1: eine perspektivische Darstellung einer erfindungsgemäßen Vorrichtung zum nicht-explosiven Aktuieren einer Komponente,
- Fig. 2: einen Schnitt durch die in Fig. 1 gezeigte Komponente, und
- Fig. 3: eine schematische Darstellung der Aktuierung eines Bolzens der Vorrichtung gemäß einer vorgegebenen Bahnkurve der Vorrichtung.

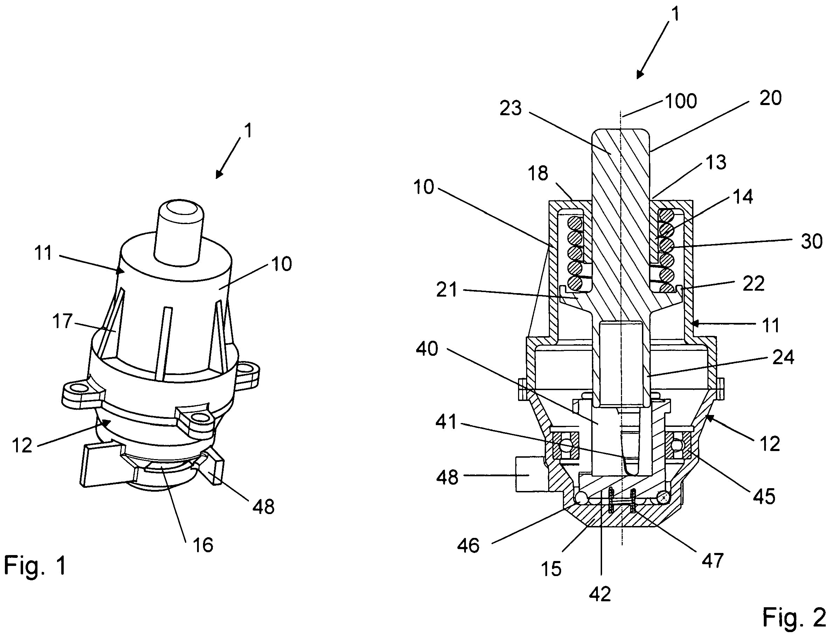

Fig. 1 zeigt eine perspektivische Darstellung einer erfindungsgemäßen Vorrichtung 1 zum nicht-explosiven Aktuieren einer Komponente, insbesondere einer Raumfahrtkomponente. Fig. 2 zeigt einen Schnitt durch die Vorrichtung 1. Die Vorrichtung umfasst ein Gehäuse 10, das aus einem Gehäuseoberteil 11 und einem Gehäuseunterteil 12 besteht. In der perspektivischen Darstellung der Fig. 1 sind zueinander korrespondierende Laschen dargestellt, über welche Gehäuseoberteil 11 und Gehäuseunterteil 12 bspw. über eine Schraubverbindung fest miteinander verbunden werden können.

Das Gehäuseoberteil 11 ist als gestufter Zylinder ausgebildet. Die gestufte Ausgestaltung des Gehäuseoberteils 11 erlaubt das Vorsehen einer Anzahl an Finnen 17 an der Außenseite des Gehäuseoberteils 11, um die Stabilität des Gehäuses 10 zu verbessern. Diese Ausgestaltung ist lediglich optional. Lässt man die Finnen 17 und die Laschen außer Betracht, ist das Gehäuseoberteil 11 des Gehäuses 10 bezüglich einer Symmetrieachse 100 rotationssymmetrisch ausgebildet.

Das Gehäuseoberteil 11 weist eine symmetrisch zu der Symmetrieachse 100 angeordnete Gehäuseöffnung 13 auf. Die Symmetrieachse 100 entspricht gleichzeitig bzw. verläuft parallel zu einer Bewegungsachse 100 des Bolzens 20. Durch die Gehäuseöffnung 13 ragt ein im Inneren des Gehäuses 10 gelagerter Bolzen 20. In den Fig. 1 und 2 befindet sich der Bolzen 20 in einer ersten Position, in der ein äußerer Abschnitt 23 des Bolzens außerhalb des Gehäuses 10 angeordnet ist. In dieser Position kann der Bolzen 20 z.B. eine Komponente halten, arretieren, usw.

Um den Bolzen im Inneren des Gehäuseoberteils 11 definiert zu führen, ist um die Gehäuseöffnung 13 herum ein ringförmiger Führungsabschnitt 14 vorgesehen, welcher sich parallel zu der Bewegungseinrichtung 100 des Bolzens 20 in das Innere des Gehäuses 10 erstreckt. Gleichzeitig weist der Bolzen 20 eine vorzugsweise über den gesamten Umfang umlaufene Schulter 21 auf, an deren äußerem Ende eine ringförmige Erhebung 22 vorgesehen ist. Bei einer Bewegung des Bolzens 20 wird dieser dann durch den Führungsabschnitt 14 und die Erhebungen 22 der Schulter 21 des Bolzens an dem Gehäuseoberteil 11 geführt.

In dem Gehäuse 10 ist zwischen diesem und dem Bolzen 20 eine Feder 30 angeordnet. Die Feder 30 ist als Spiralfeder ausgebildet, die um den Bolzen 20 herumgeführt ist. Dabei stützt sich die Feder 30 an der Schulter 21 des Bolzens 20 und einer die Gehäuseöffnung 13 aufweisenden Gehäusewand 18 ab. Wie unschwer aus der Schnittdarstellung der Fig. 2 zu erkennen ist, liegt die Feder 20 dabei in radialer Richtung an dem Führungsabschnitt 14 des Gehäuseoberteils 11 an. Im Bereich der Schulter 21 wird eine eventuelle bzgl. der Symmetrieachse 100 seitlich Bewegung durch die Erhebung 22 begrenzt. Insbesondere durch den Führungsabschnitt 14 wird dabei verhindert, dass die Feder 30 in Reibkontakt mit dem Bolzen 20 gerät.

In dem Gehäuseunterteil 12 ist eine Aktuatorhülse 40 angeordnet. Die Aktuatorhülse 40 weist eine topf-artige Gestalt auf, wobei an ihrer Innenseite eine Bahnkurve beschreibender Führungsabschnitt 41 vorgesehen ist. Ein innerer Abschnitt 24 des Bolzens 20, welcher hohl ausgebildet ist wird durch die Feder 20 gegen die Bahnkurve 41 gepresst. Die Aktuatorhülse 40 ist um die Symmetrieachse bzw. Bewegungsachse 100 drehbar in dem Gehäuseunterteil 12 gelagert. Um die Reibungskräfte gering zu halten, ist die Aktuatorhülse 40 über ein radiales Lager 45, z.B. ein Kugellager, in dem Gehäuseunterteil 12 gelagert. Eine Bodenplatte 42 der Aktuatorhülse 40 ist in dem Gehäuseunterteil 12 kugel-gelagert. In der Schnittdarstellung der Fig. 2 sind entsprechende Kugeln auf der linken und rechten Seite der Bodenplatte 10 ersichtlich. Die Kugeln stützen sich dabei in einer Ecke des Gehäuseunterteils 12 ab, welche durch einen Gehäuseboden 15 und eine sich in Richtung der Symmetrieachse 100 erstreckenden Wand ausgebildet ist.

Eine Drehung der Aktuatorhülse 40 wird durch eine Torsionsfeder 47 ermöglicht. Die Torsionsfeder 47 ist hierbei zwischen dem Gehäuseboden 15 und der Bodenplatte 42 der Aktuatorhülse 40 angeordnet. Wie aus Fig. 2 ohne weiteres ersichtlich ist, stimmt eine Drehachse der Torsionsfeder 47 mit der Symmetrieachse 100 der Aktuatorvorrichtung 1 überein. Die Torsionsfeder 47 ist in der gezeigten, ersten Position des Bolzens 20 vorgespannt.

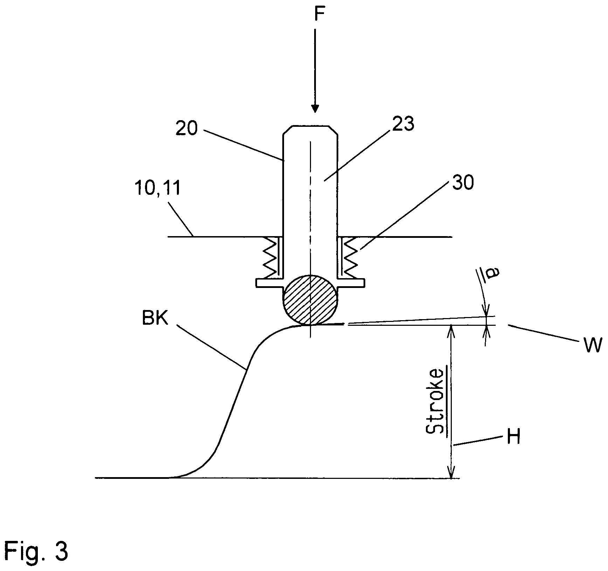

Die Aktuierung des Bolzens 20 durch den in der Aktuatorhülse 40 ausgebildeten Führungsabschnitt 41 lässt sich besser anhand der schematischen Fig. 3 erkennen. Der Führungsabschnitt 41 bildet eine Bahnkurve BK aus, wobei diese durch Verdrehung der Aktuatorhülse 40 zwischen einer ersten und einer zweiten Stellung wirksam wird. In Fig. 3 ist der Bolzen in der der Fig. 2 entsprechenden ersten Position dargestellt. Die Aktuatorhülse 40 befindet sich hierbei in ihrer ersten Stellung. Wird nun die Aktuatorhülse verdreht, so wird aufgrund der Kraft F der Feder 30 der Bolzen 20 kontinuierlich gegen den Führungsabschnitt 41 und die in Zeichenebene nach unten abfallende Bahnkurve BK gepresst. Mit zunehmender Verdrehung wird die Steigung bis zu einem Maximalwart der Bahnkurve BK größer und mündet an ihrem unteren Ende schließlich wiederum in einen in etwa waagerechten Abschnitt. Hat die Aktuatorhülse 40 die zweite Stellung, d.h. ihre Endstellung, erreicht, so befindet sich der Bolzen in seiner zweiten Position, sodass der äußere Abschnitt 23 vollständig im Inneren des Gehäuses 10 angeordnet ist (nicht dargestellt). Um die während der Verdrehung der Aktuatorhülse 40 wirkenden Reibungskräfte zu minimieren, weist die Bahnkurve BK an ihrem oberen Ende einen Winkel W auf, der zur Kompensation von Reibungskräften aufgrund des gegen den Führungsabschnitt 41 gepressten Bolzen 20 dient. Zwischen der ersten und der zweiten Stellung der Aktuatorhülse 40 wird ein Hub ("stroke") der Bahnkurve überwunden, der mindestens der Länge des äußeren Abschnitts 23 des Bolzens 20 entspricht. Auf diese Weise ist sichergestellt, dass der Bolzen 20 vollständig im Inneren des Gehäuses 20 angeordnet ist, wenn dieser sich in seiner zweiten Stellung befindet.

Aus der vorangegangen Beschreibung ist ersichtlich, dass die erste Position des Bolzens mit der ersten Stellung der Aktuatorhülse 40 korrespondiert. In entsprechender Weise korrespondiert die zweite Position des Bolzens 20 mit der zweiten Stellung der Aktuatorhülse 40. Durch den Verlauf der Bahnkurve BK kann dabei eingestellt werden, wie schnell der Bolzen von der ersten in die zweite Position gebracht werden kann.

Die Torsionsfeder 47 dient dazu, eine gleichmäßige Drehbewegung der Aktuatorhülse 40 sicherzustellen. Insbesondere sollen hierbei die Drehung der Aktuatorhülse 40 beeinflussende Kräfte durch den Bolzen 20 kompensiert werden.

Eine Rückstellung des Bolzens von seiner zweiten Position in seine erste Position kann mittels eines durch eine weitere Gehäuseöffnung 16 des Gehäuseunterteils 12 ragenden Hebels 48 bewerkstelligt werden. Der Hebel 48 steht in Eingriff mit der Aktuatorhülse 40. Durch Betätigung des Hebels 48 können die durch die Feder 30 aufgebrachte Federkraft und die Federkraft der Torsionsfeder überwunden werden. Ein entsprechender Mechanismus zum Rückstellen des Bolzens in seine erste Position sowie ein Mechanismus zum Auslösen der Aktuatorvorrichtung sind in den Figuren nicht dargestellt.

Die erfindungsgemäße Aktuatorvorrichtung ermöglicht ein nicht-explosives Aktuieren einer Komponente, insbesondere einer Raumfahrtkomponente. Über den zentral angeordneten Bolzen erfolgt eine Lastübertragung. Die Aktuatorvorrichtung 1 kann mehrfach benutzt werden. Die Wiederbenutzung der Aktuatorvorrichtung wird durch Betätigung des Hebels ermöglicht. Durch den Verlauf der Bahnkurve kann eine Betätigung des Bolzens ohne bzw. mit nur geringem Schock bewerkstelligt werden. Die Verwendung zweier redundanter Lager (Radiallager und Kugellager) ermöglicht eine Aktuierung mit geringstmöglichem Widerstand. Die Aktuatorvorrichtung ist einfach aufgebaut und mit einem geringen Gewicht bereitstellbar.

Als Materialien für die beschriebenen Komponenten der Aktuatorvorrichtung 1 wird, soweit als möglich, CFC (Kohlenstoff faserverstärkter Kohlenstoff) verwendet.

Die beschriebene Vorrichtung kann in Temperaturbereichen zwischen -150 °C und 125 °C eingesetzt werden, wodurch diese für Raumfahrtanwendungen prädestiniert ist.

### BEZUGSZEICHENLISTE

- 1: Aktuatorvorrichtung
- 10: Gehäuse
- 11: Gehäuseoberteil
- 12: Gehäuseunterteil
- 13: Gehäuseöffnung
- 14: Führungsabschnitt
- 15: Gehäuseboden
- 16: Gehäuseöffnung für Hebel
- 17: Finne
- 18: Gehäusewand
- 20: Bolzen
- 21: Schulter des Bolzens
- 22: Erhebung der Schulter
- 23: äußerer Abschnitt
- 24: innerer Abschnitt
- 30: Spiralfeder
- 40: Aktuatorhülse
- 41: Führungsabschnitt
- 42: Bodenplatte
- 45: Radiallager
- 46: Kugellager
- 47: Torsionsfeder
- 48: Hebel
- 100: Bewegungsachse/Symmetrieachse der Vorrichtung 1
- F: Kraft
- BK: Bahnkurve
- W: Winkel
- H: Hub

## Patentansprüche

1. Vorrichtung zum nicht-explosiven Aktuieren einer Komponente, insbesondere einer Raumfahrtkomponente, umfassend:
- ein Gehäuse (10);
- einen zentral in dem Gehäuse (10) angeordneten Bolzen (20), der zwischen einer ersten Position, in der ein äußerer Abschnitt (23) des Bolzens (20) in Bezug auf das Gehäuse (10) außerhalb des Gehäuses (10) angeordnet ist, und einer zweiten Position, in der der äußere Abschnitt (23) des Bolzens (20) innerhalb des Gehäuses (10) angeordnet ist, bewegbar ist;
- eine Feder (30), die zwischen dem Gehäuse (10) und dem Bolzen (20) angeordnet ist; und
- eine zwischen einer ersten und einer zweiten Stellung drehbar in dem Gehäuse (10) angeordnete Aktuatorhülse (40), die einen als Bahnkurve (BK) (Trajektorie) ausgebildeten Führungsabschnitt (41) umfasst, entlang dem der Bolzen (20) während einer durch eine Torsionsfeder (47) hervorgerufenen Drehung der Aktuatorhülse (40) geführt wird, wobei die Torsionsfeder (47) zwischen dem von dem Bolzen (20) abgewandten Ende der Aktuatorhülse (40) und dem Gehäuse (10) angeordnet ist, da
durch gekennzeichnet, dass
die Aktuatorhülse (40) an ihrem von dem Bolzen (20) abgewandten Ende kugelgelagert (46) ist.

2. Vorrichtung nach Anspruch 1, **dadurch gekennzeichnet, dass** die Aktuatorhülse (40) um eine Bewegungsachse (100) des Bolzens (20) drehbar in dem Gehäuse (10) gelagert ist.

3. Vorrichtung nach Anspruch 1 oder 2, **dadurch gekennzeichnet, dass** eine von der Feder (30) erzeugte Federkraft (F) den Bolzen (20) gegen den Führungsabschnitt (41) der Aktuatorhülse (40) presst.

4. Vorrichtung nach einem der vorhergehenden Ansprüche, **dadurch gekennzeichnet, dass** die Bahnkurve (BK) des Führungsabschnitts (41) der Aktuatorhülse (40) zwischen der ersten und der zweiten Stellung einen Hub aufweist, welcher eine Bewegung des Bolzens (20) von der ersten und der zweiten Position, oder umgekehrt, erzwingt.

5. Vorrichtung nach einem der vorhergehenden Ansprüche, **dadurch gekennzeichnet, dass** der Führungsabschnitt (41) der Aktuatorhülse (40) an einer Innenseite der Aktuatorhülse (40) ausgebildet ist, wobei ein innerer Abschnitt des Bolzens (20), dessen Außendurchmesser gleich oder kleiner als der Innendurchmesser der Aktuatorhülse (40) ist, in der ersten Position geringfügig in die Aktuatorhülse (40) ragt und in der zweiten Position zusätzlich um den Hub der Bahnkurve (BK) des Führungsabschnitts (41) in die Aktuatorhülse (40) eintaucht.

6. Vorrichtung nach einem der vorhergehenden Ansprüche, **dadurch gekennzeichnet, dass** die Bahnkurve (BK) des Führungsabschnitts (41) der Aktuatorhülse (40), bezogen auf die Flächennormale der Bewegungsrichtung des Bolzens (20), um einen vorgegebenen, spitzen Winkel geneigt ist.

7. Vorrichtung nach einem der vorhergehenden Ansprüche, **dadurch gekennzeichnet, dass** die Aktuatorhülse (40) in einem Radiallager (45) gelagert ist, welches sich an dem Gehäuse (10) abstützt.

8. Vorrichtung nach einem der vorhergehenden Ansprüche, **dadurch gekennzeichnet, dass** die Aktuatorhülse durch einen von außen durch eine Öffnung des Gehäuses (10) ragenden Hebel verdrehbar ist.

9. Vorrichtung nach einem der vorhergehenden Ansprüche, **dadurch gekennzeichnet, dass** die Feder (30) eine Druckfeder ist, die sich an einer Schulter des Bolzens (20) abstützt, welche sich in etwa in radialer Richtung, bezogen auf die Bewegungsrichtung des Bolzens (20), erstreckt.

10. Vorrichtung nach einem der vorhergehenden Ansprüche, **dadurch gekennzeichnet, dass** die Feder (30) eine Spiralfeder umfasst, die um den Bolzen (20) herum geführt ist.

11. Vorrichtung nach einem der vorhergehenden Ansprüche, **dadurch gekennzeichnet, dass** die Feder (30) zumindest abschnittsweise um einen Führungsabschnitt (41) des Gehäuses (10) geführt ist, welcher sich um die Öffnung für den Bolzen (20) herum in das Innere des Gehäuses (10) erstreckt.

## Claims

1. A device for nonexplosively actuating a component, in particular an aerospace component, comprising:
- a housing (10);
- a bolt (20) that is centrally arranged in the housing (10) and is movable between a first position in which an outer section (23) of the bolt (20) is situated outside the housing (10) in relation to the housing (10), and a second position in which the outer section (23) of the bolt (20) is situated inside the housing (10);
- a spring (30) that is situated between the housing (10) and the bolt (20); and
- an actuator sleeve (40) that is rotatably situated between a first and a second position in the housing (10), and that includes a guide section (41), designed as a trajectory (BK), along which the bolt (20) is guided during a rotation of the actuator sleeve (40) caused by a torsion spring (47), wherein the torsion spring (47) is situated between the end of the actuator sleeve (40) facing away from the bolt (20) and the housing (10), ch
aracterized in that the actuator sleeve (40) is ball bearing-mounted (46) on its end facing away from the bolt (20).

2. The device according to Claim 1, **characterized in that** the actuator sleeve (40) is supported in the housing (10) so that the actuator sleeve is rotatable about a motion axis (100) of the bolt (20).

3. The device according to Claim 1 or 2, **characterized in that** an elastic force (F) generated by the spring (30) presses the bolt (20) against the guide section (41) of the actuator sleeve (40).

4. The device according to one of the preceding claims, **characterized in that** the trajectory (BK) of the guide section (41) of the actuator sleeve (40) has a lift between the first and the second position which forces a movement of the bolt (20) from the first and the second position, or vice versa.

5. The device according to one of the preceding claims, **characterized in that** the guide section (41) of the actuator sleeve (40) is formed on an inner side of the actuator sleeve (40), wherein an inner section of the bolt (20), whose outer diameter is less than or equal to the inner diameter of the actuator sleeve (40), in the first position protrudes slightly into the actuator sleeve (40), and in the second position additionally submerges into the actuator sleeve (40) by the magnitude of the lift of the trajectory (BK) of the guide section (41).

6. The device according to one of the preceding claims, **characterized in that** the trajectory (BK) of the guide section (41) of the actuator sleeve (40 is inclined by a predefined acute angle relative to the surface normal of the movement direction of the bolt (20).

7. The device according to one of the preceding claims, **characterized in that** the actuator sleeve (40) is mounted in a radial bearing (45) that is supported on the housing (10).

8. The device according to one of the preceding claims, **characterized in that** the actuator sleeve is rotatable by a lever that protrudes from the outside through an opening in the housing (10).

9. The device according to one of the preceding claims, **characterized in that** the spring (30) is a compression spring that is supported on a shoulder of the bolt (20), the shoulder extending approximately in the radial direction relative to the movement direction of the bolt (20).

10. The device according to one of the preceding claims, **characterized in that** the spring (30) comprises a coil spring that is guided around the bolt (20).

11. The device according to one of the preceding claims, **characterized in that** the spring (30) is guided, at least in sections, around a guide section (41) of the housing (10), the guide section extending around the opening for the bolt (20) into the interior of the housing (10).

## Revendications

1. Dispositif d'actionnement non explosif d'un composant, en particulier d'un composant utilisé dans l'espace, comprenant :
- un carter (10) ;
- un boulon (20) disposé au centre dans le carter (10) et mobile entre une première position dans laquelle une partie extérieure (23) du boulon (20) est disposée en dehors du carter (10) par rapport au carter (10), et une deuxième position dans laquelle la partie extérieure (23) du boulon (20) est disposée à l'intérieur du carter (10) ;
- un ressort (30) disposé entre le carter (10) et le boulon (20) ; et
- une douille d'actionnement (40), disposée dans le carter (10) de manière rotative entre une première et une deuxième position et comprenant une partie de guidage (41) réalisée sous la forme d'une trajectoire courbe (BK) (trajectoire), est guidée le long du boulon (20) pendant une rotation de la douille d'actionnement (40) provoquée par une barre de torsion (47), la barre de torsion (47) étant disposée entre l'extrémité de la douille d'actionnement (40) détournée du boulon (20) et le carter (10),
**caractérisé en ce que** la douille d'actionnement est montée sur roulement à billes (46) à son extrémité détournée du boulon (20).

2. Dispositif selon la revendication 1, **caractérisé en ce que** la douille d'actionnement (40) est montée dans le carter (10) de manière rotative autour d'un axe de déplacement (100) du boulon.

3. Dispositif selon la revendication 1 ou 2, **caractérisé en ce qu'**une force de ressort (F) produite par le ressort (30) comprime le boulon (20) contre la partie de guidage (41) de la douille d'actionnement (40).

4. Dispositif selon l'une quelconque des revendications précédentes, **caractérisé en ce que** la trajectoire courbe (BK) de la partie de guidage (41) de la douille d'actionnement présente entre la première et la deuxième position une course qui force un déplacement du boulon (20) de la première et la deuxième position ou vice versa.

5. Dispositif selon l'une quelconque des revendications précédentes, **caractérisé en ce que** la partie de guidage (41) de la douille d'actionnement (40) est réalisée sur une face intérieure de la douille d'actionnement (40), dans lequel une partie intérieure du boulon (20) dont le diamètre extérieur est égal ou inférieur au diamètre intérieur de la douille d'actionnement (40) dépasse légèrement dans la douille d'actionnement (40) dans la première position et s'enfonce en plus de la course de la trajectoire courbe (BK) de la partie de guidage (41) dans la douille d'actionnement (40) dans la deuxième position.

6. Dispositif selon l'une quelconque des revendications précédentes, **caractérisé en ce que** la trajectoire courbe (BK) de la partie de guidage (41) de la douille d'actionnement (40) est inclinée d'un angle aigu prédéfini par rapport à la normale de la direction de déplacement du boulon (20).

7. Dispositif selon l'une quelconque des revendications précédentes, **caractérisé en ce que** la douille d'actionnement (40) et montée sur un roulement radial (45) prenant appui sur le carter (10).

8. Dispositif selon l'une quelconque des revendications précédentes, **caractérisé en ce qu'**un levier faisant saillie de l'extérieur à travers une ouverture du carter (10) permet de tourner la douille d'actionnement.

9. Dispositif selon l'une quelconque des revendications précédentes, **caractérisé en ce que** le ressort (30) est un ressort de pression prenant appui sur un épaulement du boulon (20) s'étendant approximativement dans la direction radiale par rapport à la direction de mouvement du boulon (20).

10. Dispositif selon l'une quelconque des revendications précédentes, **caractérisé en ce que** le ressort (30) comprend un ressort en spirale placé autour du boulon (20).

11. Dispositif selon l'une quelconque des revendications précédentes, **caractérisé en ce que** le ressort (30) est placé au moins par endroits autour d'une partie de guidage (41) du carter (10) qui s'étend autour de l'ouverture pour le boulon (20) vers l'intérieur du carter (10).
